# FASCICULE DE BREVET EUROPEEN

(11) **EP 4 314 491 B1**
(45) Date de publication et mention de la délivrance du brevet: **12.03.2025**
(21) Numéro de dépôt: 22717642.7
(22) Date de dépôt: 29.03.2022
(51) Int. Cl.: F01D 5/08, F01D 11/00

(54) **DISPOSITIF D'ETANCHEITE ET DE REINJECTION D'UN FLUX DE CONTOURNEMENT POUR DISTRIBUTEUR DE TURBINE**
VORRICHTUNG ZUM ABDICHTEN UND RÜCKFÜHREN EINES NEBENSTROMS FÜR EINE TURBINENDÜSE
DEVICE FOR SEALING AND REINJECTING A BYPASS FLOW FOR A TURBINE NOZZLE

(30) Priorité: 31.03.2021 FR 2103343
(43) Date de publication de la demande: 07.02.2024
(73) Titulaire: SAFRAN AIRCRAFT ENGINES, 75015 Paris (FR)
(72) Inventeur: LEMONNIER, Jérôme Claude George, 77550 MOISSY-CRAMAYEL (FR); BOISNAULT, Franck Davy, 77550 MOISSY-CRAMAYEL (FR); VAN NOORT, Antoine Bruno, 77550 MOISSY-CRAMAYEL (FR)
(74) Mandataire: Brevalex
(86) Numéro de dépôt international: PCT/FR2022/050584
(87) Numéro de publication internationale: WO 2022/208018

(56) Documents cités:
- CN-A- 110 273 712
- DE-A1- 102013 011 350

## Description

### Domaine technique

L'invention se rapporte au domaine des turbines de turbomachine, notamment pour un ensemble propulsif d'aéronef.

### État de la technique antérieure

Une turbine de turbomachine conventionnelle comprend un ou plusieurs étages formés chacun par un distributeur et une roue mobile équipés de plateformes qui délimitent radialement entre elles une veine principale d'écoulement d'un fluide. Le distributeur d'un étage est configuré de manière à accélérer le fluide et le dévier en direction des aubes de la roue mobile du même étage pour entraîner celle-ci en rotation.

Afin de réduire le débit du fluide de veine qui tend à contourner un tel distributeur en-dehors de la veine principale, il est connu de monter au pied du distributeur un dispositif d'étanchéité tel que décrit dans le document FR3027343A1. Un autre exemple est divulgué dans CN110273712A.

Le fluide de contournement, généralement appelé « bypass », qui traverse un tel dispositif d'étanchéité retourne dans la veine principale en générant des pertes de mélange, réduisant ainsi la performance et le rendement de la turbine.

### Exposé de l'invention

Dans le but d'améliorer la performance et le rendement d'une turbine de turbomachine, l'invention a pour objet un distributeur de turbomachine s'étendant autour d'un axe longitudinal et comprenant une plateforme, une pale s'étendant radialement vis-à-vis de l'axe longitudinal vers l'extérieur à partir de la plateforme, une bride principale s'étendant radialement vers l'intérieur à partir de la plateforme, un élément abradable et un élément de support portant l'élément abradable, l'élément de support comprenant une bride reliée à ladite bride principale, l'élément abradable étant destiné à être disposé en regard de deux léchettes portées par un rotor de la turbomachine et qui définissent entre elles une cavité inter-léchettes. Selon l'invention, le distributeur comprend un conduit de réinjection comprenant une entrée configurée pour déboucher dans la cavité inter-léchettes et une sortie formée à une extrémité radialement externe de la bride de l'élément de support et configurée pour déboucher dans une cavité s'étendant axialement en aval du distributeur, le conduit de réinjection comprenant un tronçon s'étendant dans la bride de l'élément de support.

En fonctionnement, un fluide de contournement pénètre dans la cavité inter-léchettes. Sous l'action de la pression différentielle entre la cavité inter-léchettes et la cavité en aval du distributeur, qui est reliée à la veine principale, une partie du fluide de contournement traverse le conduit de réinjection.

Le positionnement de la sortie du conduit au niveau de l'extrémité radialement externe de la bride de l'élément de support permet de réinjecter le fluide de contournement dans la veine principale radialement à proximité de la veine principale.

L'invention permet ainsi de réduire les pertes de mélange, ce qui permet d'augmenter la performance et le rendement de la turbine.

L'invention permet aussi de simplifier la fabrication du distributeur et en particulier l'usinage du conduit de réinjection.

De préférence, ledit tronçon du conduit de réinjection est droit.

Dans un mode de réalisation, le conduit de réinjection comprend un tronçon d'entrée traversant l'élément abradable.

Ce tronçon d'entrée est de préférence droit.

De manière générale, la présence de tronçons droits dans le conduit de réinjection permet de simplifier son usinage.

Dans un mode de réalisation, le tronçon d'entrée définit une direction d'entrée perpendiculaire à ladite direction de sortie, ou formant avec celle-ci un angle proche de 90°.

Dans un mode de réalisation, le conduit de réinjection comprend un tronçon de sortie s'étendant axialement.

L'orientation axiale du tronçon de sortie permet ainsi de réinjecter le fluide de contournement dans la veine principale d'une façon qui minimise les pertes de mélange avec le fluide qui circule dans la veine principale.

Le tronçon de sortie du conduit de réinjection peut présenter une direction de sortie parallèle à l'axe longitudinal, afin de maximiser la composante axiale de la vitesse du flux réinjecté.

Alternativement, la direction de sortie peut être oblique par rapport à l'axe longitudinal de sorte que le tronçon de sortie s'étende à la fois axialement et radialement. Dans ce cas, l'angle entre la direction de sortie et l'axe longitudinal, considéré dans un plan passant à la fois par l'axe longitudinal et par un point d'intersection de la direction de sortie avec la section de sortie du conduit de réinjection, est de préférence relativement petit, par exemple inférieur à 20°, de sorte que la composante radiale soit relativement petite par rapport à la composante axiale de la vitesse du flux réinjecté.

Dans un mode de réalisation, ledit tronçon de sortie du conduit de réinjection s'étend tangentiellement par rapport à l'axe longitudinal.

L'orientation tangentielle du tronçon de sortie permet de réinjecter le fluide de contournement dans la veine principale en augmentant la composante tangentielle de la vitesse du fluide sortant du conduit de réinjection, dans un même sens giratoire que le flux principal de fluide circulant dans la veine principale.

Cela permet de réduire encore davantage les pertes de mélange et d'augmenter en conséquence la performance et le rendement de la turbine.

Dans un mode de réalisation, le tronçon de sortie du conduit de réinjection a une section qui diminue vers la sortie.

Le tronçon de sortie peut ainsi former une cavité convergente vers la sortie, permettant d'accélérer le flux sortant du conduit de réinjection.

De préférence, la section du tronçon de sortie diminue vers la sortie de manière monotone.

Dans un mode de réalisation, la bride de l'élément de support comprend une surface aval et un élément s'étendant en saillie de cette surface aval et formant le tronçon de sortie du conduit de réinjection.

Cet élément peut être un élément rapporté ou être réalisé avec ladite bride d'une seule pièce.

Dans un mode de réalisation, l'élément de support est relié à ladite bride principale de manière à autoriser un déplacement radial de l'élément de support par rapport à cette bride principale.

Dans un mode de réalisation, ladite bride de l'élément de support est une bride aval, l'élément de support comprenant une bride amont, ladite bride principale du distributeur s'étendant axialement entre la bride amont et la bride aval de l'élément de support.

Dans un mode de réalisation, le distributeur comprend une tôle de protection thermique fixée sur la bride aval de l'élément de support.

Dans une variante de ce mode de réalisation, le distributeur comprend aussi une autre tôle de protection thermique fixée sur la bride amont de l'élément de support de sorte que le conduit de réinjection s'étende axialement entre ces deux tôles.

Dans un mode de réalisation, la pale a un bord de fuite définissant une ligne dans le prolongement de laquelle s'étend la sortie du conduit de réinjection.

Autrement dit, la sortie du conduit de réinjection peut être placée dans le sillage du bord de fuite de la pale, sensiblement au droit de celui-ci.

La pression dans le sillage de bord de fuite de la pale est plus faible que dans des régions circonférentiellement adjacentes, c'est-à-dire s'étendant circonférentiellement entre les bords de fuite de deux pales adjacentes.

Le fait de positionner la sortie du conduit de réinjection dans le sillage du bord de fuite de la pale permet d'augmenter la différence de pression entre l'entrée et la sortie du conduit.

Dans un mode de réalisation, l'élément de support du dispositif d'étanchéité est annulaire.

L'invention a aussi pour objet une turbine pour turbomachine, comprenant un distributeur tel que défini ci-dessus.

Dans un mode de réalisation, la turbine est une turbine basse pression.

Dans un mode de réalisation, la turbine comprend une roue mobile s'étendant axialement en aval du distributeur, la roue mobile comprenant un becquet, la sortie du conduit de réinjection du distributeur débouchant radialement au-dessus dudit becquet.

L'invention a aussi pour objet une turbomachine pour ensemble propulsif d'aéronef, comprenant une telle turbine.

Selon un autre aspect, l'invention a pour objet un procédé de fabrication d'un distributeur tel que défini ci-dessus.

Dans un mode de réalisation, le procédé comprend une étape d'usinage de l'élément de support du dispositif d'étanchéité de manière à former le conduit de réinjection.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en section longitudinale d'un ensemble propulsif d'aéronef ;
[Fig. 2] est une demi-vue schématique partielle en coupe longitudinale d'une turbine de turbomachine conforme à l'invention ;
[Fig. 3] est une vue schématique en perspective d'une portion circonférentielle d'un dispositif d'étanchéité conforme à l'invention, montrant un élément de support et un élément abradable qui forment un conduit de réinjection ;
[Fig. 4] est une vue schématique en coupe longitudinale du dispositif d'étanchéité de la figure 3, selon un plan de coupe passant par une partie du conduit de réinjection ;
[Fig. 5] est une vue schématique d'une portion circonférentielle de l'élément de support du dispositif d'étanchéité de la figure 3.

### Description détaillée de modes de réalisation

Les figures comprennent un référentiel L, R et C définissant respectivement des directions longitudinale/axiale, radiale et circonférentielle/tangentielle orthogonales entre elles.

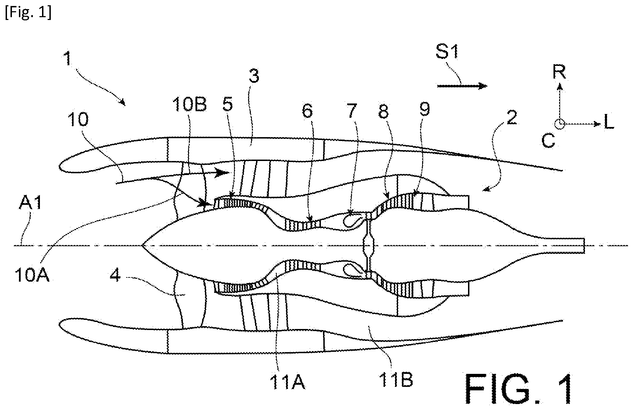

Il est représenté à la figure 1 un ensemble propulsif 1 d'aéronef comprenant une turbomachine 2 carénée par une nacelle 3. Dans cet exemple, la turbomachine 2 est un turboréacteur à double corps et à double flux.

Par la suite, les termes « amont » et « aval » sont définis par rapport à un sens S1 d'écoulement des gaz à travers l'ensemble propulsif 1 lorsque celui-ci est propulsé.

Le turboréacteur 2 présente un axe central longitudinal A1 autour duquel s'étendent ses différents composants, en l'occurrence, de l'amont vers l'aval, une soufflante 4, un compresseur basse pression 5, un compresseur haute pression 6, une chambre de combustion 7, une turbine haute pression 8 et une turbine basse pression 9. Les compresseurs 5 et 6, la chambre de combustion 7 et les turbines 8 et 9 forment un générateur de gaz.

En fonctionnement, un écoulement d'air 10 pénètre dans l'ensemble propulsif 1 par une entrée d'air en amont de la nacelle 3, traverse la soufflante 4 puis se divise en un flux primaire 10A central et un flux secondaire 10B. Le flux primaire 10A s'écoule dans une veine principale 11A de circulation des gaz traversant le générateur de gaz. Le flux secondaire 10B s'écoule quant à lui dans une veine secondaire 11B entourant le générateur de gaz et délimitée radialement vers l'extérieur par la nacelle 3.

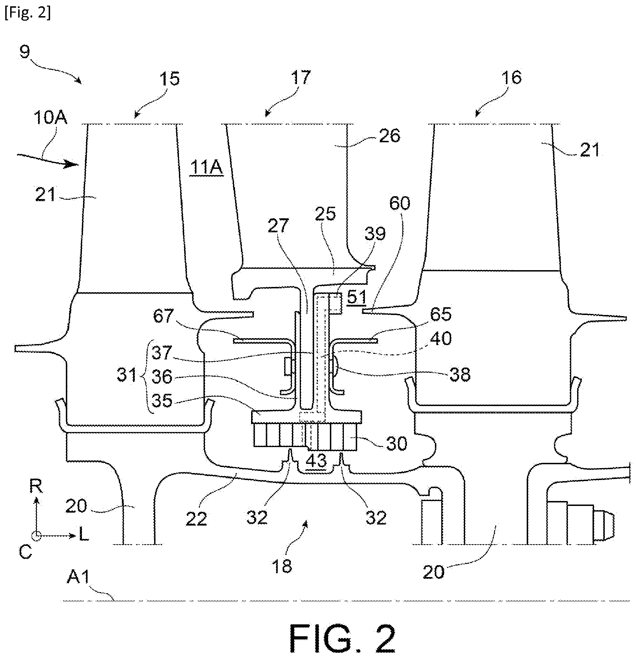

La turbine basse pression 9, partiellement représentée à la figure 2, est configurée pour récupérer une partie de l'énergie de combustion afin d'entraîner en rotation autour de l'axe A1 des roues mobiles formant le rotor de la turbine 9. Entre chaque paire de roues mobiles adjacentes, la turbine 9 comprend une couronne aubagée statorique formant un distributeur.

La figure 2 montre partiellement deux roues mobiles 15 et 16 et de la turbine 9.

Le distributeur 17 s'étend axialement entre la roue mobile 15 formant une roue amont et la roue mobile 16 formant une roue aval.

De manière connue en soi, chacune des roues mobiles 15 et 16 comprend un disque 20 et des aubes 21 portées par le disque 20.

Dans cet exemple, le disque 20 de la roue amont 15 comprend une virole 22 s'étendant axialement en direction de la roue aval 16, radialement à l'intérieur du distributeur 17. Une extrémité aval de la virole 22 est reliée au disque 20 de la roue aval 16 de manière à solidariser l'une avec l'autre les roues 15 et 16 en rotation autour de l'axe A1.

Le distributeur 17 comprend dans cet exemple plusieurs secteurs disposés circonférentiellement bout à bout de manière à former ensemble ladite couronne aubagée.

De manière connue en soi, chaque secteur du distributeur 17 comprend une plateforme 25 délimitant radialement vers l'intérieur une portion de la veine principale 11A, des pales 26 s'étendant radialement vers l'extérieur à partir de la plateforme 25 et étant circonférentiellement espacées autour de l'axe A1, ainsi qu'une bride 27 s'étendant radialement vers l'intérieur à partir de la plateforme 25.

Le distributeur 17 comprend aussi un dispositif d'étanchéité 18 comportant un élément abradable 30, aussi appelé pièce d'usure, un élément de support 31 et deux léchettes 32.

L'élément abradable 30, l'élément de support 31 ainsi que les léchettes 32 forment chacun une pièce annulaire d'axe A1.

L'élément de support 31 comprend une partie axiale 35 ainsi qu'une bride amont 36 et une bride aval 37 s'étendant chacune radialement vers l'extérieur à partir de la partie axiale 35.

La partie axiale 35 de l'élément de support 31 définit une surface interne sur laquelle est fixé l'élément abradable 30.

Les brides 36 et 37 de l'élément de support 31 définissent axialement entre elles un espace recevant la bride 27 de chaque secteur du distributeur 17. La largeur de cet espace correspond sensiblement à celle de la bride 27 de chaque secteur de manière à bloquer la position axiale de l'élément de support 31 par rapport au distributeur 17.

Dans cet exemple, la position de l'élément de support 31 est aussi bloquée circonférentiellement mais est libre de se déplacer radialement par rapport à la bride 27 du distributeur 17.

Pour ce faire, la bride 27 de chaque secteur du distributeur 17 comprend dans cet exemple un alésage radial dans lequel peut coulisser radialement un pion 38 monté serré dans un orifice correspondant de chacune des brides 36 et 37.

Bien entendu, plusieurs pions répartis autour de l'axe A1 peuvent être mis en œuvre et coopérer avec les brides 27, 36 et 37 de manière analogue pour chacun des secteurs du distributeur 17.

L'élément de support 31 est ainsi relié à la bride 27 de manière à autoriser un déplacement radial relatif de l'un par rapport à l'autre, étant entendu que cette liberté de déplacement peut être assurée par tout autre moyen de coulissement.

Dans l'exemple de la figure 2, les léchettes 32 du dispositif d'étanchéité 18 sont portées par la virole 22.

En fonctionnement, les roues mobiles 15 et 16 sont entraînées en rotation autour de l'axe A1, ce qui entraîne un frottement des léchettes 32 sur l'élément abradable 30, lequel présente dans cet exemple une structure en nid d'abeilles.

Le dispositif 18 assure ainsi une étanchéité dynamique réduisant le phénomène de contournement du flux primaire 10A radialement à l'intérieur du distributeur 17.

Le distributeur 17 de la figure 2 comprend aussi des tôles 65 et 67 de protection thermique portées par les brides 37 et 36 respectivement.

L'invention se rapporte plus spécifiquement à un moyen de réinjection dans la veine principale 11A d'une partie du flux de contournement traversant le dispositif d'étanchéité 18.

Dans le mode de réalisation des figures 2 à 4, le dispositif d'étanchéité 18 forment un conduit de réinjection 40 traversant l'élément abradable 30 et l'élément de support 31.

Le conduit 40 comprend une entrée 41 débouchant sur une surface interne 42 de l'élément abradable 30 qui correspond en l'occurrence à une surface de frottement des léchettes 32.

Axialement, l'entrée 41 du conduit 40 s'étend entre les deux léchettes 32 de manière à déboucher dans une cavité inter-léchettes 43, laquelle est délimitée axialement en amont par l'une des léchettes 32, axialement en aval par l'autre léchette 32, radialement vers l'intérieur par la virole 22 et radialement vers l'extérieur par l'élément abradable 30 (voir figure 2).

A partir de l'entrée 41, le conduit 40 s'étend radialement en traversant l'élément abradable 30 jusqu'à une cavité intermédiaire 45 formée dans la partie axiale 35 de l'élément de support 31.

La partie du conduit 40 s'étendant entre l'entrée 41 et cette cavité intermédiaire 45 forme un tronçon d'entrée 46 droit présentant dans cet exemple un axe A2 perpendiculaire à l'axe A1.

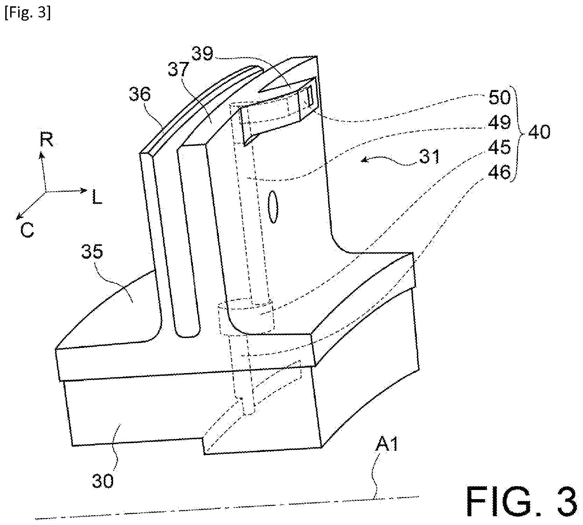

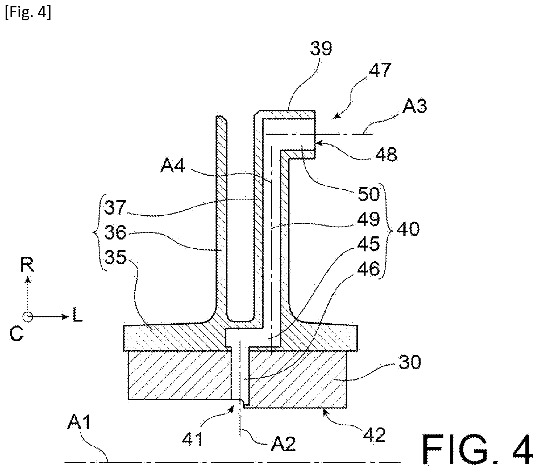

Dans le mode de réalisation des figures 3 et 4, l'élément de support 31 comprend un élément 39 formant une protubérance qui s'étend axialement en saillie de la bride aval 37 au niveau d'une extrémité de cette bride 37 radialement à l'opposé de la partie axiale 35.

Le conduit 40 comprend une sortie 47 débouchant sur une surface aval 48 de la protubérance 39 et par conséquent au niveau d'une extrémité radialement externe de la bride 37.

Entre la cavité intermédiaire 45 et la sortie 47, le conduit 40 comprend un tronçon 49 droit s'étendant radialement à travers la bride aval 37 et un tronçon de sortie 50 s'étendant axialement et tangentiellement à travers la protubérance 39.

Dans cet exemple, le tronçon de sortie 50 présente un axe A3 parallèle à l'axe A1 et perpendiculaire à l'axe A2 ainsi qu'à un axe A4 du tronçon 49.

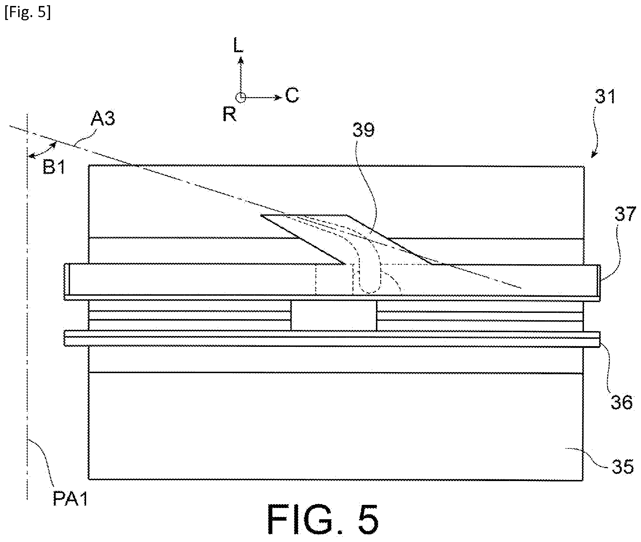

En référence aux figures 3 et 5, la protubérance 39 formant le tronçon de sortie 50 du conduit 40 est orientée selon la direction circonférentielle de sorte que l'axe A3 intersecte un plan PA1 contenant l'axe A1.

Dans cet exemple, l'axe A3 et le plan PA1 forment un angle B1 compris entre 40° et 90°.

Compte tenu de cette orientation circonférentielle du tronçon de sortie 50, l'entrée 41 et la sortie 47 du conduit 40 ont l'une par rapport à l'autre une position circonférentielle différente autour de l'axe A1.

En référence à la figure 2, la protubérance 39 est configurée de sorte que la sortie 47 du conduit 40 débouche dans une cavité 51 s'étendant en aval de la bride 27 du distributeur 17 et étant fluidiquement reliée à la veine principale 11A.

Dans cet exemple, la sortie 47 du conduit 40 débouche radialement au-dessus d'un becquet 60 de la roue mobile 16, ce becquet 60 s'étendant vers l'avant de la roue mobile 16 axialement en direction du distributeur 17.

Sous l'action de la pression différentielle entre cette cavité 51 et la cavité inter-léchettes 43, une partie du fluide de contournement présente dans la cavité inter-léchettes 43 est aspirée dans le conduit 40 via l'entrée 41 et en est éjectée par la sortie 47.

Cette partie de fluide est ainsi réinjectée dans la cavité 51 et par suite dans la veine principale 11A de manière à présenter une vitesse ayant une forte composante axiale ainsi qu'une composante tangentielle, ce qui permet de réduire significativement les pertes de mélange.

Afin d'accélérer le fluide sortant du conduit de réinjection 40, le tronçon de sortie 50 du conduit de réinjection 40 a une section qui diminue de manière monotone vers la sortie 47, formant ainsi une cavité de sortie convergente.

Dans cet exemple, la protubérance 39 est configurée de sorte que la sortie 47 du conduit de réinjection 40 s'étende dans le prolongement du bord de fuite de l'une des pales 26 du distributeur 17, afin d'accentuer la différence de pression entre les cavités 43 et 51.

Bien entendu, l'invention n'est pas limitée aux exemples et modes de réalisation décrits ci-dessus, celle-ci couvrant aussi, notamment, de nombreuses géométries du conduit de réinjection 40 et/ou de l'élément de support 31 et/ou de l'élément abradable 30 et/ou des léchettes 32 et/ou de position relative de ces différents organes les uns par rapport aux autres.

Par exemple, les tronçons 46 et/ou 49 et/ou 50 du conduit de réinjection 40 peuvent avoir une section de forme circulaire ou ovoïde ou encore rectangulaire.

Dans des modes de réalisation non représentés, le dispositif d'étanchéité comprend plus de deux léchettes et le conduit de réinjection a une entrée débouchant dans une cavité délimitée par une première et une deuxième desdites léchettes et/ou une entrée débouchant dans une cavité délimitée par la deuxième et par une troisième desdites léchettes.

Le dispositif peut par ailleurs comprendre plusieurs conduits de réinjection 40 tels que celui décrit ci-dessus, lesquels peuvent par exemple être circonférentiellement répartis autour de l'axe A1 de manière à s'étendre chacun sous une pale 26 respective du distributeur 17.

De plus, l'invention peut être mise en œuvre dans une turbine différente de celle décrite ci-dessus, par exemple au sein de la turbine haute pression 8.

Enfin, il est rappelé que l'élément de support 31 est relié à la bride 27 de manière à autoriser un déplacement radial relatif de l'un par rapport à l'autre, étant entendu que cette liberté de déplacement peut être assurée par tout autre moyen de coulissement. Il est ainsi opéré une dissociation entre d'une part les secteurs angulaires de distributeur comprenant les secteurs de plateformes 25, les pales 26 et les brides principales 27, et d'autre part l'ensemble comprenant l'élément abradable 30 et l'élément de support 31 portant cet élément abradable, tout deux préférentiellement annulaires et non-sectorisés, et par exemple réalisés de manière monobloc. Cette réalisation empêche les fuites dans les espaces intersecteurs du distributeur, grâce à la nature annulaire et non-sectorisée des éléments précités. Ainsi, les brides principales de pale 27 s'insèrent entre les éléments 36 et 37, et peuvent se déplacer radialement sans entraîner les éléments annulaires et non-sectorisés. Les déplacements radiaux de ces ensembles distincts sont ainsi avantageusement dissociés.

Dans l'invention, la position du conduit de réinjection 40 est donc indépendante des déplacements radiaux des pales et des secteurs angulaires de distributeur intégrant ces pales. Cela permet de maitriser les fuites dans les espaces intersecteurs, ainsi que les fuites au niveau du joint à labyrinthe intégrant les léchettes 32.

## Revendications

1. Distributeur (17) de turbomachine (2) s'étendant autour d'un axe longitudinal (A1) et comprenant une plateforme (25), une pale (26) s'étendant radialement vis-à-vis de l'axe longitudinal (A1) vers l'extérieur à partir de la plateforme (25), une bride principale (27) s'étendant radialement vers l'intérieur à partir de la plateforme (25), un élément abradable (30) et un élément de support (31) portant l'élément abradable (30), l'élément de support (31) comprenant une bride (37) reliée à ladite bride principale (27), l'élément abradable (30) étant destiné à être disposé en regard de deux léchettes (32) portées par un rotor de la turbomachine (2) et qui définissent entre elles une cavité inter-léchettes (43), **caractérisé en ce qu'**il comprend un conduit de réinjection (40) comprenant une entrée (41) configurée pour déboucher dans la cavité inter-léchettes (43) et une sortie (47) formée à une extrémité radialement externe de la bride (37) de l'élément de support (31) et configurée pour déboucher dans une cavité (51) s'étendant axialement en aval du distributeur (17), le conduit de réinjection (40) comprenant un tronçon (49) s'étendant dans la bride (37) de l'élément de support (31).

2. Distributeur (17) selon la revendication 1, dans lequel ledit tronçon (49) du conduit de réinjection (40) est droit.

3. Distributeur (17) selon la revendication 1 ou 2, dans lequel le conduit de réinjection (40) comprend un tronçon d'entrée (46) droit traversant l'élément abradable (30).

4. Distributeur (17) selon l'une quelconque des revendications 1 à 3, dans lequel le conduit de réinjection (40) comprend un tronçon de sortie (50) s'étendant axialement et de préférence tangentiellement par rapport à l'axe longitudinal (A1).

5. Distributeur (17) selon la revendication 4, dans lequel la bride (37) de l'élément de support (31) comprend une surface aval et un élément (39) s'étendant en saillie de cette surface aval et formant le tronçon de sortie (50) du conduit de réinjection (40).

6. Distributeur (17) selon l'une quelconque des revendications 1 à 5, dans lequel ladite bride (37) de l'élément de support (31) est une bride aval, l'élément de support (31) comprenant une bride amont (36), ladite bride principale (27) du distributeur (17) s'étendant axialement entre la bride amont (36) et la bride aval (37) de l'élément de support (31).

7. Distributeur (17) selon la revendication 6, comprenant une tôle (65) de protection thermique fixée sur la bride aval (37) de l'élément de support (31) et de préférence une autre tôle (67) de protection thermique fixée sur la bride amont (36) de l'élément de support (31) de sorte que le conduit de réinjection (40) s'étende axialement entre ces deux tôles (65, 67).

8. Distributeur (17) selon l'une quelconque des revendications 1 à 7, dans lequel la pale (26) a un bord de fuite définissant une ligne dans le prolongement de laquelle s'étend la sortie (47) du conduit de réinjection (40).

9. Distributeur (17) selon l'une quelconque des revendications 1 à 8, dans lequel l'élément de support (31) est relié à la bride principale (27) de manière à autoriser un déplacement radial relatif de l'un par rapport à l'autre.

10. Turbine (9) pour turbomachine (2), comprenant un distributeur (17) selon l'une quelconque des revendications 1 à 9.

11. Turbine (9) selon la revendication 10, comprenant une roue mobile (16) s'étendant axialement en aval du distributeur (17), la roue mobile (16) comprenant un becquet (60), la sortie (47) du conduit de réinjection (40) du distributeur (17) débouchant radialement au-dessus dudit becquet (60).

12. Procédé de fabrication d'un distributeur (17) selon l'une quelconque des revendications 1 à 9, comprenant une étape d'usinage de l'élément de support (31) de manière à former le conduit de réinjection (40).

## Patentansprüche

1. Verteiler (17) für ein Turbinentriebwerk (2), der sich um eine Längsachse (A1) erstreckt und eine Plattform (25), eine Schaufel (26), die sich radial in Bezug auf die Längsachse (A1) von der Plattform (25) nach außen erstreckt, einen Hauptflansch (27), der sich radial von der Plattform (25) nach innen erstreckt, ein verschleißbares Element (30) und ein Trägerelement (31) umfasst, das das verschleißbare Element (30) trägt, wobei das Trägerelement (31) einen Flansch (37) umfasst, der mit dem Hauptflansch (27) verbunden ist, wobei das verschleißbare Element (30) dazu bestimmt ist, gegenüber zwei Zungen (32) angeordnet zu sein, die von einem Rotor des Turbinentriebwerks (2) getragen werden und die zwischen sich einen Zwischenzungenhohlraum (43) definieren, **dadurch gekennzeichnet, dass** sie eine Rückführungsleitung (40) umfasst, die einen Einlass (41), der dazu konfiguriert ist, in den Zwischenzungenhohlraum (43) zu münden, und einen Auslass (47) umfasst, der an einem radial äußeren Ende des Flansches (37) des Trägerelements (31) ausgebildet und dazu konfiguriert ist, in einen Hohlraum (51) zu münden, der sich axial stromabwärts des Verteilers (17) erstreckt, wobei die Rückführungsleitung (40) einen Abschnitt (49) umfasst, der sich in dem Flansch (37) des Trägerelements (31) erstreckt.

2. Verteiler (17) nach Anspruch 1, wobei der Abschnitt (49) der Rückführungsleitung (40) gerade ist.

3. Verteiler (17) nach Anspruch 1 oder 2, wobei die Rückführungsleitung (40) einen geraden Einlassabschnitt (46) umfasst, der durch das verschleißbare Element (30) verläuft.

4. Verteiler (17) nach einem der Ansprüche 1 bis 3, wobei die Rückführungsleitung (40) einen Auslassabschnitt (50) umfasst, der sich axial und vorzugsweise tangential in Bezug zur Längsachse (A1) erstreckt.

5. Verteiler (17) nach Anspruch 4, wobei der Flansch (37) des Trägerelements (31) eine stromabwärtige Oberfläche und ein Element (39) umfasst, das von der stromabwärtigen Oberfläche vorsteht und den Auslassabschnitt (50) der Rückführungsleitung (40) bildet.

6. Verteiler (17) nach einem der Ansprüche 1 bis 5, wobei der Flansch (37) des Trägerelements (31) ein stromabwärtiger Flansch ist, wobei das Trägerelement (31) einen stromaufwärtigen Flansch (36) umfasst, wobei sich der Hauptflansch (27) des Verteilers (17) axial zwischen dem stromaufwärtigen Flansch (36) und dem stromabwärtigen Flansch (37) des Trägerelements (31) erstreckt.

7. Verteiler (17) nach Anspruch 6, der ein Wärmeschutzblech (65) umfasst, das an dem stromabwärtigen Flansch (37) des Trägerelements (31) befestigt ist, und vorzugsweise ein weiteres Wärmeschutzblech (67) umfasst, das an dem stromaufwärtigen Flansch (36) des Trägerelements (31) befestigt ist, so dass sich die Rückführungsleitung (40) axial zwischen den beiden Blechen (65, 67) erstreckt.

8. Verteiler (17) nach einem der Ansprüche 1 bis 7, wobei die Schaufel (26) eine hintere Kante aufweist, die eine Linie definiert, in deren Fortsetzung sich der Auslass (47) der Rückführungsleitung (40) erstreckt.

9. Verteiler (17) nach einem der Ansprüche 1 bis 8, wobei das Trägerelement (31) mit dem Hauptflansch (27) verbunden ist, um eine relative radiale Bewegung dieser beiden in Bezug zueinander zu ermöglichen.

10. Turbine (9) für ein Turbinentriebwerk (2), die einen Verteiler (17) nach einem der Ansprüche 1 bis 9 umfasst.

11. Turbine (9) nach Anspruch 10, die ein bewegliches Rad (16) umfass, das sich axial stromabwärts des Verteilers (17) erstreckt, wobei das bewegliche Rad (16) einen Spoiler (60) umfasst, wobei der Auslass (40) der Rückführungsleitung (17) des Verteilers (17) radial über dem Spoiler (60) mündet.

12. Verfahren zum Herstellen eines Verteilers (17) nach einem der Ansprüche 1 bis 9, das einen Schritt des Bearbeitens des Trägerelements (31) umfasst, um die Rückführungsleitung (40) zu bilden.

## Claims

1. A turbine engine (2) nozzle (17) extending around a longitudinal axis (A1) and comprising a platform (25), a blade (26) extending radially with respect to the longitudinal axis (A1) outwards from the platform (25), a main flange (27) extending radially inwards from the platform (25), an abradable element (30) and a support element (31) carrying the abradable element (30), the support element (31) comprising a flange (37) connected to said main flange (27), the abradable element (30) being intended to be arranged opposite two wipers (32) carried by a rotor of the turbine engine (2) and which define therebetween an inter-wiper cavity (43), **characterised in that** it comprises a reinjection duct (40) comprising an inlet (41) configured to open out into the inter-wiper cavity (43) and an outlet (47) formed at a radially outer end of the flange (37) of the support element (31) and configured to open out into a cavity (51) extending axially downstream of the nozzle (17), the reinjection duct (40) comprising a section (49) extending in the flange (37) of the support element (31).

2. The nozzle (17) according to claim 1, wherein said section (49) of the reinjection duct (40) is straight.

3. The nozzle (17) according to claim 1 or 2, wherein the reinjection duct (40) comprises a straight inlet section (46) passing through the abradable element (30).

4. The nozzle (17) according to any one of claims 1 to 3, wherein the reinjection duct (40) comprises an outlet section (50) extending axially and preferably tangentially with respect to the longitudinal axis (A1).

5. The nozzle (17) according to claim 4, wherein the flange (37) of the support element (31) comprises a downstream surface and an element (39) projecting from this downstream surface and forming the outlet section (50) of the reinjection duct (40).

6. The nozzle (17) according to any one of claims 1 to 5, wherein said flange (37) of the support element (31) is a downstream flange, the support element (31) comprising an upstream flange (36), said main flange (27) of the nozzle (17) extending axially between the upstream flange (36) and the downstream flange (37) of the support element (31).

7. The nozzle (17) according to claim 6, comprising a thermal protection sheet metal (65) fastened on the downstream flange (37) of the support element (31) and preferably another thermal protection sheet metal (67) fastened on the upstream flange (36) of the support element (31) so that the reinjection duct (40) extends axially between these two sheet metals (65, 67).

8. The nozzle (17) according to any one of claims 1 to 7, wherein the blade (26) has a trailing edge defining a line in the continuation of which the outlet (47) of the reinjection duct (40) extends.

9. The nozzle (17) according to any one of claims 1 to 8, wherein the support element (31) is connected to the main flange (27) so as to enable a relative radial movement thereof relative to one another.

10. A turbine (9) for a turbine engine (2), comprising a nozzle (17) according to any one of claims 1 to 9.

11. The turbine (9) according to claim 10, comprising a movable wheel (16) extending axially downstream of the nozzle (17), the movable wheel (16) comprising a spoiler (60), the outlet (47) of the reinjection duct (40) of the nozzle (17) opening out radially above said spoiler (60).

12. A method for manufacturing a nozzle (17) according to any one of claims 1 to 9, comprising a step of machining the support element (31) so as to form the reinjection duct (40).
